## Europäisches Patentamt

## European Patent Office

## Office européen des brevets

(19)

(11) Veröffentlichungsnummer: **0 206 355**
**B1**

(12) # EUROPÄISCHE PATENTSCHRIFT

(45) Veröffentlichungstag der Patentschrift:
21.02.90

(51) Int. Cl.⁴: **B23K 11/36, B23K 11/24**

(21) Anmeldenummer: 86108832.6

(22) Anmeldetag: 28.06.86

(54) Vorrichtung zur Güteprüfung einer Widerstands-Schweissverbindung.

(30) Priorität: 28.06.85 DE 3523112

(43) Veröffentlichungstag der Anmeldung:
30.12.86 Patentblatt 86/52

(45) Bekanntmachung des Hinweises auf die Patenterteilung:
21.02.90 Patentblatt 90/8

(84) Benannte Vertragsstaaten:
DE FR GB IT SE

(56) Entgegenhaltungen:
GB-A- 2 018 471
US-A- 2 817 747
US-A- 4 168 430
US-A- 4 214 164
US-A- 4 359 622

(73) Patentinhaber: **Bayerische Motoren Werke Aktiengesellschaft, Patentabteilung AJ-3 Postfach 40 02 40 Petuelring 130, D-8000 München 40(DE)**

(72) Erfinder: **Heinzel, Wilfried, Münchnerstrasse 97 b, D-8043 Unterföhrung(DE)**

(74) Vertreter: **Bullwein, Fritz, Bayerische Motoren Werke Aktiengesellschaft Postfach 40 02 40 Petuelring 130 AJ-33, D-8000 München 40(DE)**

## Beschreibung

Die Erfindung bezieht sich auf eine Vorrichtung zur Güteprüfung und eine Widerstands-Schweißverbindung, bei der ein Strahlungsdetektor auf eine Schweißstelle ausgerichtet ist und die ausgesandte Strahlung aufnimmt.

Bei einer derartigen Vorrichtung bestehen zwei Probleme, die eng miteinander zusammenhängen. Zum einen ist es erforderlich, den Strahlungsdetektor möglichst nahe an der Schweißstelle anzuordnen, da die ausgesandte Strahlungsintensität ohnehin gering und nach Beendigung des Schweißvorgangs rasch abnehmend ist. Damit aber ergibt sich die Schwierigkeit, daß der Strahlungsdetektor zunehmend Schweißspritzern ausgesetzt ist, die seine Eintrittsöffnung zumindest teilweise verschließen und ihn zunehmend unwirksam machen.

Diese Probleme bestehen auch bei einer bekannten Vorrichtung der eingangs genannten Art (US-A 4 168 430). Dort wird der Strahlungsdetektor erst im Anschluß an einen Schweißvorgang in eine Position gebracht, in der er auf die Schweißstelle ausgerichtet ist. Dieses Ausrichten des Strahlungsdetektors vollzieht sich erst im Anschluß an den Schweißvorgang zu dem Zeitpunkt, bei dem eine benachbarte Schweißstelle angelegt wird. Es besteht somit hier ein zeitlicher Zusammenhang zwischen den Schweißvorgängen für benachbarte Schweißpunkte und dem Erkennen der von einem früheren Schweißpunkt ausgehenden Strahlung. Dieser zeitliche Zusammenhang ist, wie ohne weiteres erkennbar, nur vage definiert und insbesondere im Hinblick auf die tatsächlichen Verhältnisse bei einem Schweißvorgang nicht geeignet, eine verläßliche Aussage über die Güte eines Schweißvorgangs zu erhalten.

Dies ergibt sich aus den raschen Abgängen der von einer Schweißstelle ausgehenden Strahlung nach dem Ende des Schweißvorgangs. Ursache hierfür ist die im Vergleich zur jeweiligen Schweißstelle große Masse an wärmeleitendem, nicht verschweißtem Material, über das die an der Schweißstelle entstehende Wärme sofort und praktisch ungehindert abfließen kann. Es ist somit für eine verläßliche Aussage unabdingbar, möglichst rasch nach seinem Entstehen eine Bestimmung des Wärmebilds einer Schweißstelle vorzunehmen.

Der Erfindung liegt die Aufgabe zugrunde, eine Vorrichtung der eingangs genannten Art zu schaffen, bei der es mit konstruktiv einfachen Mitteln möglich ist, den Strahlungsdetektor möglichst nahe an der Schweißstelle anzuordnen, ohne daß dieser jedoch Schweißspritzern ausgesetzt ist. Ferner soll es möglich sein, mit Hilfe des Strahlungsdetektors ein Wärmebild der Schweißstelle unmittelbar nach dem Ende des Schweißvorgangs aufzunehmen.

Die Erfindung löst diese Aufgabe dadurch, daß die Eintrittsöffnung des Strahlungsdetektors während des eigentlichen Schweißvorgangs bereits auf die Schweißstelle ausgerichtet, jedoch im wesentlichen zum Zwecke des Schutzes vor Schweißspritzern, abgedeckt ist, und nach Beendigung des Schweißvorgangs freigegeben wird.

Alternativ kann die Schweißelektrode relativ zum Strahlungsdetektor gegenüber der Schweißstelle verfahrbar sein. Die vor und nach dem Schweißvorgang bestehende optische Verbindung zwischen Schweißstelle und Eintrittsöffnung wird durch die Schweißelektrode lediglich während des Schweißvorgangs unterbrochen.

In der Zeichnung ist ein Ausführungsbeispiels der Erfindung dargestellt.

Es zeigt:

Fig. 1 ein erstes Ausführungsbeispiel einer Vorrichtung zur Güteprüfung einer Widerstands-Schweißverbindung und

Fig. 2 eine Alternative zur Ausführung von Fig. 1.

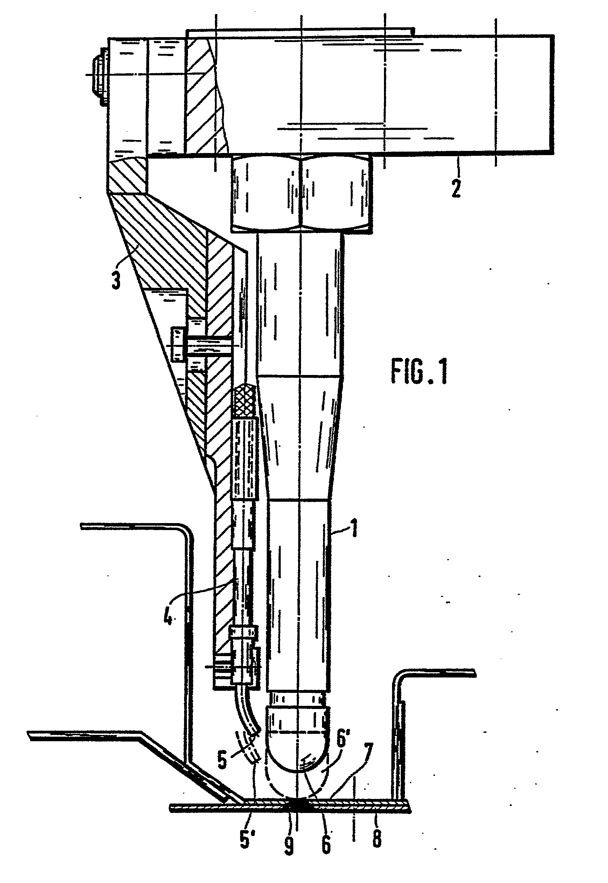

Beim Aufführungsbeispiel von Fig. 1 befindet sich eine Schweiß-Elektrode 1 an einem Halter 2, der Teil eines nicht weiter dargestellten Schweiß-Roboters ist. Am Halter 2 ist über ein Tragteil 3 eine Lichtfaseroptik 4 befestigt, deren Eintrittsöffnung 5 seitlich über der Kappe 6 der Elektrode 1 angeordnet ist. In die Eintrittsöffnung fallende Infrarot-Strahlung gelangt über die Lichtfaseroptik 4 zu einem ebenfalls nicht dargestellten Strahlungswandler, dessen Ausgangssignale ein Maß für die in die Eintrittsöffnung fallende Strahlungsintensität und damit für die Güte eines untersuchten Schweißpunkts ist. Die Gütebestimmung kann durch Vergleich der gemessenen Strahlungsintensität mit einem Referenzwert erfolgen.

Zum Herstellen einer Schweißverbindung zwischen zwei Blechteilen 7 und 8 wird die Elektrode 1 mit ihrer Kappe 6 auf eine Schweißstelle 9 gefahren und der Schweißvorgang durchgeführt. Die mit der Elektrode 1 bewegte Lichtfaseroptik 4 ist derart angeordnet und ausgerichtet, daß sie während des Schweißvorgangs, bei der die Kappe 6 die strichliert eingezeichnete Lage 6' besitzt, durch die Kappe 6 selbst vor Schweißspritzern, die von der Schweißstelle 9 ausgehen, geschützt ist. Die Eintrittsöffnung 5 sitzt dabei an der Stelle 5'.

Nach Beendigung des Schweißvorgangs hebt die Elektrode 1 von der Schweißstelle 9 ab. Dadurch ändert sich die Ausrichtung der Eintrittsöffnung 5 gegenüber der Schweißstelle 9 einerseits und andererseits gibt die Kappe 6 den "Blick" der Eintrittsöffnung 5 auf die Schweißstelle 9 frei. Die von dort ausgehende Strahlung vorzugsweise in Form von IR-Strahlung kann nunmehr in die Eintrittsöffnung 5 und damit über die Lichtfaseroptik 4 zum Strahlungswandler gelangen. Damit kann die Gütenprüfung der Schweißverbindung unmittelbar nach Beendigung des Schweißvorgangs vorgenommen werden. Die Eintrittsöffnung 5 bleibt auch bei längerem Einsatz der Elektrode 1 stets vor Schweißspritzern geschützt. Die Güteprüfung von Schweißverbindungen kann damit über denselben Einsatz-Zeitraum ohne weitere Vorkehrungen vorgenommen werden.

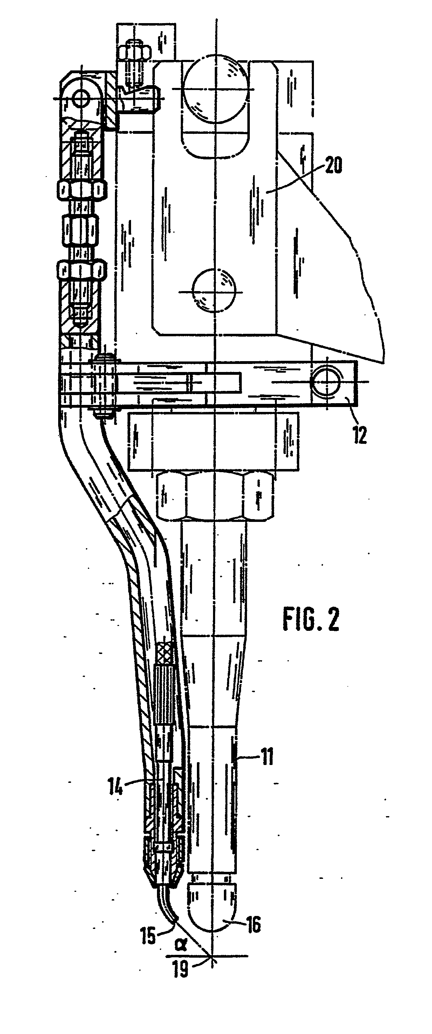

Beim Ausführungsbeispiel von Fig. 2 ist die Schweiß-Elektrode 11 gegenüber dem Halter 12 beweglich. Eine entsprechende Lichtfaseroptik 14 mit ihrer Eintrittsöffnung 15 ist am Halter 12 befestigt. Zum Durchführen eines Schweißvorgangs wird die Elektrode 11 durch gemeinsame Bewegung mit dem Halter 12 knapp über die vorgesehene Schweißstelle 19 gebracht. Die Eintrittsöffnung 15 der Lichtfaseroptik 14 ist dabei auf die Schweißstelle 19 ausgerichtet. Die Elektrode 11 wird nunmehr durch einen Zylinder 20 relativ zu dem feststehenden Halter 12 auf die Schweißstelle 19 bewegt. Dabei schiebt sich die Kappe 16 der Elektrode 11 in die optische Verbindung zwischen Eintrittsöffnung 15 und Schweißstelle 19 und unterbricht diese Verbindung. Von der Schweißstelle 19 ausgehende Schweißspritzer können dann nicht mehr in die Eintrittsöffnung 15 gelangen, da die Spitze 16 diese Eintrittsöffnung 15 abschirmt. Nach Beendigung des Schweißvorgangs wird die Elektrode 11 von der Schweißstelle 19 abgehoben. Die nach wie vor an derselben Stelle stehende Eintrittsöffnung 15 erhält dadurch wieder eine optische Verbindung mit der Schweißstelle 19 und kann die von dort ausgehende Strahlung aufnehmen. Auch hier schirmt die Elektrode 11 die Eintrittsöffnung 15 während des Schweißvorgangs vor Schweißspritzern ab.

## Patentansprüche

1. Vorrichtung zur Güteprüfung einer Widerstands-Schweißverbindung, bei der ein Strahlungsdetektor auf eine Schweißstelle ausgerichtet ist und die ausgesandte Strahlung aufnimmt, dadurch gekennzeichnet, daß die Eintrittsöffnung (5) des Strahlungsdetektors (4, 5) während des eigentlichen Schweißvorgangs bereits auf die Schweißstelle ausgerichtet, jedoch im wesentlichen zum Zwecke des Schutzes vor Schweißspritzern, abgedeckt ist, und nach Beendigung des Schweißvorgangs freigegeben wird.

2. Vorrichtung nach Anspruch 1, dadurch gekennzeichnet, daß die Eintrittsöffnung (5) derart angeordnet und ausgerichtet ist, daß sie durch die Schweiß-Elektrode (1) selbst verdeckt ist und bei deren Entfernen von der Schweißstelle (9) in optische Verbindung mit der Schweißstelle (9) gelangt.

3. Vorrichtung nach Anspruch 2, dadurch gekennzeichnet, daß der Strahlungsdetektor (4,5) starr mit der Schweiß-Elektrode (1) verbunden ist.

4. Vorrichtung nach Anspruch 2, dadurch gekennzeichnet, daß die Schweiß-Elektrode (11) relativ zum Strahlungsdetektor (14,15) verfahrbar ist.

## Claims

1. A device for checking the quality of a resistance weld joint, in which a radiation detector is aligned with a weld and receives the transmitted radiation, characterised in that the inlet opening (5) of the radiation detector (4, 5) is aligned on the weld during the actual welding operation, but is covered, mainly for protection against weld spatter, and is uncovered at the end of the welding operation.

2. A device according to claim 1, characterised in that the inlet opening (5) is disposed and aligned so that it is covered by the welding electrode (1) itself and, when the electrode is moved from the weld (9), comes into optical connection with the weld (9).

3. A device according to claim 2, characterised in that the radiation detector (4, 5) is rigidly connected to the welding electrode (1).

4. A device according to claim 2, characterised in that the welding electrode (11) is movable relative to the radiation detector (14, 15).

## Revendications

1. Equipement de contrôle d'une jonction soudée par résistance, dans laquelle un détecteur de rayonnement est pointé sur une soudure et reçoit le rayonnement émis, caractérisé en ce que la lumière d'entrée (5) du détecteur (4, 5) est déjà dirigée sur l'endroit de la soudure pendant l'opération de soudage elle-même, mais toutefois est masquée essentiellement dans le but de la protéger des projections de soudure puis est libérée après achèvement du processus de soudage.

2. Equipement selon la revendication 1, caractérisé en ce que la lumière d'entrée (5) est disposée et dirigée, de façon qu'elle soit masquée par l'électrode de soudure (1) elle-même et que, par l'éloignement de cette dernière, elle entre en liaison optique avec la soudure.

3. Equipement selon la revendication 2, caractérisé en ce que le détecteur de rayonnement (4, 5) est relié de façon fixe à l'électrode de soudage.

4. Equipement selon la revendication 2, caractérisé en ce que l'électrode de soudage (11) est déplaçable par rapport au détecteur de rayonnement.

FIG.1

FIG. 2